# EUROPEAN PATENT APPLICATION

(11) **EP 3 742 046 A1**
(43) Date of publication of application: **25.11.2020**
(21) Application number: 19382403.4
(22) Date of filing: 20.05.2019
(51) Int. Cl.: F21S 45/00, B60Q 1/00, B60R 16/02, H02G 3/04

(54) **METHOD AND DEVICE FOR CABLE ARRANGEMENT IN AN AUTOMOTIVE LAMP**

(71) Applicant: Gureak Lanean S.A., 20018 San Sebastián, Guipúzcoa (ES); VALEO ILUMINACION, S.A., 23600 Martos Jaen (ES)
(72) Inventor: Sanchez Idigoras, Ion, 20400 Ibarra (Guipuzcoa) (ES); Romera Moral, Juan Pablo, 20400 Ibarra (Guipuzcoa) (ES); Martin Garrido, Juan Carlos, 23600 Martos, Jaén (ES); Rubia, Juan Antonio, 23600 Martos, Jaén (ES); Garcia Castilla, Jose, 23600 Martos, Jaén (ES); Sanchez Alguacil, Ramon, 23600 Martos, Jaén (ES); Valdivia Mateos, Gema, 23600 Martos, Jaén (ES); Perez Negrillo, Juan, 23600 Martos, Jaén (ES)
(74) Representative: Balder IP Law, S.L.

(57) **Abstract**

A cable support (1-5) for routing one or more cables (100) in an automotive lamp (50-53), the cable support (1-5) comprising a plurality of brackets (10-14) mechanically concatenated, each bracket (10-14) comprising at least two mechanical connectors (20-25) and having longitudinal, transversal and vertical axes (X,Y,Z); and at least a first pair of brackets (10-14) of the plurality of brackets (10-14) is mechanically concatenated together such that a first angle (80-85) is formed between the longitudinal axes (x) thereof.

## Description

### TECHNICAL FIELD

The present invention relates to the field of cable arrangement. More particularly, the present invention relates to the field of routing and holding cables in an automotive lamp.

### STATE OF THE ART

Automotive lamps comprise a number of devices that are to fit in a reduced space or volume. Many of these devices are electronic devices, such as light sources, light modules, controllers, etc. that require electrical energy and/or electrical signals for operating them. Cables need to be introduced in the automotive lamps to supply the electrical energy and/or electrical signals to these devices.

The reduced space increases the complexity of cable routing within the automotive lamp. As a result, the cables may end up having an increased length for manipulation and/or securing thereof, and/or the cables may be prone to problems such as cable entanglement, or more severe problems such as the cables colliding with movable parts of the automotive lamp and/or colliding with devices having an elevated temperature, for example heat sinks.

These problems negatively influence the reliability of the automotive lamp and make the production of the automotive lamp more expensive owing to additional cable length and cumbersome cable installation and maintenance.

Cable supports for automotive lamps intended to solve these problems have been developed in the prior art.

Patent document EP-2266845-B1 describes a cable harness in the form of a single-piece U or V-shaped cable channel. The cable harness is attached to the interior of the automotive lamp and routes the cables received therein.

Patent document US-20130292159-A1 describes a wire harness that is wired in a predetermined wiring pattern with respect to an attached body, and is packaged by being held by a one-sided adhesive sheet in order to keep the wiring pattern.

These solutions, however, consist in manufacturing the cable support according to the geometry of the lamp housing.

Patent document WO-9203832-A1 discloses the formation of a cable tree in which bundles of cables are grouped together in accordance with the different branches of the cable tree. In each bundle a cable-like reinforcing element is introduced for shaping the path of the branch, the bundles are held together by means of tape; alternatively, only the cables are provided in the bundles and external separate reinforcing elements are added for holding the bundles grouped together.

Patent document WO-2012169158-A1 describes a cable tree having a trunk portion and branch portions. The trunk portion groups all the electric wires together and distributes them to the branch portions. The trunk portion is manufactured according to the shape of an arrangement portion of a vehicle, and both the trunk and branch portions are flexible, thereby making possible to bend them so as to change the shape of the cable tree.

Patent document DE-3609704-A1 discloses a wiring harness that is produced according to the shape of the interior of the motor vehicle. The wiring harness comprises arms branching off from a main portion that may be modified owing to breaking points arranged in the harness.

Albeit these solutions make possible to more flexibly design a cable support, the production of the same still depends on the geometry of the housing that they must adapt to. The adjustments supported by these cable supports are, therefore, cumbersome and unpractical.

The methods and devices for cable management of the present disclosure are intended to solve the aforementioned problems and the shortcomings of prior art cable supports.

### DESCRIPTION OF THE INVENTION

A first aspect of the invention relates to a method for arranging one or more cables in an automotive lamp, comprising: forming a cable support, the cable support being formed by mechanically concatenating a plurality of brackets, each bracket comprising at least two mechanical connectors and having longitudinal, transversal and vertical axes, and at least a first pair of brackets of the plurality of brackets is mechanically concatenated together such that a first angle is formed between the longitudinal axes thereof; attaching the cable support to a housing of the automotive lamp; and introducing the one or more cables in the cable support.

In the context of the present disclosure, mechanical concatenation refers to mechanically mating or coupling one bracket to another so as to provide a portion of a cable support.

The cable support is formed by a number of brackets that may be produced in series with a shape not specifically tailored to the geometry of the housing of any particular automotive lamp. The cable support, however, can attach to any housing and arrange the one or more cables despite not being manufactured with a shape adapted to said housing. This is so because the brackets themselves and/or the unions between two consecutive brackets (i.e. the unions between two brackets mechanically coupled) provide changes in the direction in which the subsequent brackets (and, hence, the cable support) extend.

With a limited number of bracket geometries it is possible to form a cable support that attaches to the housing of the automotive lamp provided, and being formed in such a way that the one or more cables that need be arranged therein are routed from one point of the lamp to another and held in place securely. The cable support may be formed before being attached to the housing, or even during installation in the housing, i.e. after attaching the cable support to the housing when not all the brackets have been mechanically concatenated, thereby making possible to better adjust the cable support to the particulars of the housing and the cable(s) to be arranged (e.g. the cable(s) being capable of supporting more or less acute angles in the routing thereof). The cable support may be attached to an inner part or face of the housing or to an outer part or face of the housing.

Brackets of the cable support may be removed by detaching one bracket from another thereby releasing the mechanical union, rotated by changing how one bracket is mechanically concatenated with another bracket, and/or added by mechanically concatenating further bracket(s).

In the context of the present disclosure, it is considered that an angle is formed when the two respective longitudinal axes are not parallel, that is to say the angle formed between the two longitudinal axes in a plane is more than 0° and less than 360°, and the angle not being 180°.

In some embodiments, the longitudinal axes forming the first angle are contained in a first plane, the first plane being defined by: the longitudinal and the transversal axes of a first bracket of the first pair of brackets, or the longitudinal and the vertical axes of the first bracket of the first pair of brackets.

The mechanical concatenation of the first pair of brackets provides a change in the direction in which the cable support extends, either along the direction parallel to the transversal axis of the first bracket or along the direction parallel to the vertical axis of the first bracket. Consequently, two or more portions of the cable support feature different directions in which the same extends. Since these directions may be adjusted by means of the brackets provided and/or how the same are mechanically concatenated, the resulting cable support may be tailored to the shape of the housing of the automotive lamp.

In some embodiments, at least a second pair of brackets of the plurality of brackets is mechanically concatenated together such that a second angle is formed between the longitudinal axes thereof that are contained in the first plane or in a second plane, the second plane being defined by: the longitudinal and the transversal axes of a first bracket of the second pair of brackets, or the longitudinal and the vertical axes of the first bracket of the second pair of brackets.

The mechanical concatenation of at least the second pair of brackets provides a further change in the direction in which the cable support extends, either along the direction parallel to the transversal axis of the first bracket or along the direction parallel to the vertical axis of the first bracket. Consequently, three or more portions of the cable support feature different directions in which the same extends. Since these directions may be adjusted by means of the brackets provided and/or how the same are mechanically concatenated, the resulting cable support may be tailored to the shape of the housing of the automotive lamp.

In some embodiments, the longitudinal axes of the second pair of brackets are contained in the second plane. In some of these embodiments, the first plane is defined by the longitudinal and the transversal axes of the first bracket of the first pair of brackets, and the second plane is defined by the longitudinal and the vertical axes of the first bracket of the second pair of brackets.

The brackets of the second pair of brackets and/or the mechanical concatenation between the second pair of brackets makes possible to provide the length of the cable support such that it is comprised in at least two planes that are not parallel. Therefore, the cable support extends changing the direction at least twice and wherein one change of direction makes the cable support to extend in a direction in a different plane. Accordingly, the cable support arranges the one or more cables in housings (of automotive lamps) in which the space for allocating the cable(s) spans in different planes and is not contained in a single plane.

In some embodiments, at least some brackets of the plurality of brackets comprise a hole for receiving an attaching device; and the step of attaching the cable support to the housing of the automotive lamp comprises introducing a first end of the attaching devices in one hole of the at least some brackets and a second end in one hole in the housing of the automotive lamp.

Some or all brackets of the plurality of brackets are provided with means for being attached to the housing in the form of a hole.

An operator may provide a number of attaching devices for securing the cable support to the housing. The attaching devices are mechanical devices that, preferably, have the first end thereof shaped according to the holes of the brackets and the second end thereof shaped according to the holes of the housing for a more reliable attachment of the cable support to the housing.

When the automotive lamp is to undergo maintenance, an operator may remove the attaching devices from the brackets or from the housing of the automotive lamp for effective withdrawal of the cable support, thereby freeing space for the maintenance tasks.

In some embodiments, the method further comprises providing cable ties around at least some brackets of the plurality of brackets after the one or more cables have been introduced in the cable support, wherein the at least some brackets comprise slots at opposite edges adapted for receiving a cable tie.

The cable ties maintain the one or more cables within the cable support.

The slots of the brackets ease the arrangement of the cable ties to hold the one or more cables. Also, the slots may be advantageous for tightening the cable ties as much as possible in order to maintain the one or more cables closer to the base of the brackets.

In some embodiments, the cable support is a first cable support and the plurality of brackets is a first plurality of brackets; and the method further comprises: forming a second cable support by mechanically concatenating a second plurality of brackets, each bracket comprising at least two mechanical connectors; attaching the second cable support to the housing of the automotive lamp; and introducing the one or more cables in the second cable support such that a first part of length of the one or more cables is introduced in the first cable support and a second part of the length of the one or more cables is introduced in the second cable support.

A number of cable supports may be arranged for routing and holding the one or more cables within the automotive lamp, thus the one or more cables may go from a first location to a second location within the housing of the automotive lamp through two or more cable supports. The provision of separate cable supports may be advantageous when the geometry of the housing where the cable support is to be attached to (on the inner part or face of the housing, or on the outer part or face of the housing) is particularly complex, and both forming and attaching shorter cable supports is easier.

In some embodiments, each bracket has at least one of the at least two mechanical connectors adapted to support mechanical concatenation to another bracket such that the another bracket may have the longitudinal axis thereof parallel to or forming an angle with the longitudinal axis of the bracket.

The mechanical connectors may have a geometry capable of supporting the coupling of mechanical connectors of other brackets in different angles. Accordingly, the longitudinal axes of a pair of brackets are such that they are parallel (i.e. the cable support extends without changing the direction owing to the mechanical concatenation of the pair of brackets) or an angle between the two is formed (i.e. the cable support extends changing the direction owing to the mechanical concatenation of the pair of brackets). Therefore, with few bracket geometries it is possible to form cable supports that are tailored, in a modular way, to the geometry of the housing of the automotive lamp.

In some embodiments, the at least one mechanical connector of each bracket is a male or a female mechanical connector that has a shape comprising straight and/or curvilinear edges. In some of these embodiments, the shape is a regular polygonal geometry or an irregular polygonal geometry.

Mechanically concatenating the brackets is simple and straightforward owing to the male-female connector mating. The shape of the connectors, which is a closed shape, may be varied and include straight and/or curvilinear edges, and even have regular or irregular polygonal geometry. Such shape of the connectors makes possible to support a number of distinct ways in which two same brackets may engage, accordingly the mechanical concatenation thereof may produce a change in the direction that the cable support extends if so desired and forming an angle in accordance with the supported distinct ways of engagement. For example, the male and female connectors of two brackets may have a regular or irregular star shape that supports engagement thereof in a plurality of ways (e.g. three, four, five, six or even more ways).

The shape of the male mechanical connector has to be complementary, either partially or completely, to the shape of the female mechanical connector so that engagement between the two is possible for mechanical concatenation of brackets.

A second aspect of the invention relates to a cable support for routing one or more cables in an automotive lamp, the cable support comprising a plurality of brackets mechanically concatenated, each bracket comprising at least two mechanical connectors and having longitudinal, transversal and vertical axes; and at least a first pair of brackets of the plurality of brackets is mechanically concatenated together such that a first angle is formed between the longitudinal axes thereof.

The plurality of brackets, which may be manufactured in series, forms the cable support such that it extends in a direction that changes (one or more times, e.g. two, three, four, etc. times) throughout the length of the cable support. The cable support and the changes in direction thereof make possible to route the one or more cables within the housing of an automotive lamp, which may feature a particular geometry yet the cable support may be adapted to attach to such geometry.

When the same plurality of brackets is arranged differently, and/or the same plurality of brackets is mechanically concatenated differently (that is to say, the brackets are in the same order but mechanically coupled with different relative positions between two consecutive brackets), a different cable support is formed with the same brackets, thereby making possible to adjust it to a housing having a different geometry, for example. Also, it is possible to add, remove, and/or swap brackets so as to change the length of the cable support and/or provide a cable support with a different shape. Therefore, with a limited number of bracket geometries it is possible to form a cable support that attaches to the housing of the automotive lamp provided, and being formed in such a way that the one or more cables that need be arranged therein are routed from one point of the lamp to another and held in place securely.

In some embodiments, the longitudinal axes forming the first angle are contained in a first plane, the first plane being defined by: the longitudinal and the transversal axes of a first bracket of the first pair of brackets, or the longitudinal and the vertical axes of the first bracket of the first pair of brackets.

In some embodiments, at least a second pair of brackets of the plurality of brackets is mechanically concatenated together such that a second angle is formed between the longitudinal axes thereof that are contained in the first plane or in a second plane, the second plane being defined by: the longitudinal and the transversal axes of a first bracket of the second pair of brackets, or the longitudinal and the vertical axes of the first bracket of the second pair of brackets.

In some embodiments, the longitudinal axes of the second pair of brackets are contained in the second plane. In some of these embodiments, the first plane is defined by the longitudinal and the transversal axes of the first bracket of the first pair of brackets, and the second plane is defined by the longitudinal and the vertical axes of the first bracket of the second pair of brackets.

In some embodiments, the cable support further comprises a plurality of attaching devices; at least some brackets of the plurality of brackets comprise a hole for receiving an attaching device; and each attaching device has a first end introduced in one hole of the at least some brackets and a second end adapted for introduction in a hole in a housing of the automotive lamp.

In some embodiments, the cable support further comprises the one or more cables and a plurality of cable ties, at least some brackets comprise slots at opposite edges adapted for receiving a cable tie, and each cable tie of the plurality of cable ties surrounds one bracket and holds the one or more cables in the bracket.

In some embodiments, each bracket has at least one of the at least two mechanical connectors adapted to support mechanical concatenation to another bracket such that the another bracket may have the longitudinal axis thereof parallel to or forming an angle with the longitudinal axis of the bracket.

In some embodiments, the at least one mechanical connector of each bracket is a male or a female mechanical connector that has a shape comprising straight and/or curvilinear edges. In some of these embodiments, the shape is a regular polygonal geometry or an irregular polygonal geometry.

Similar advantages as those described for the first aspect of the invention are also applicable to this aspect of the invention.

A third aspect of the invention relates to an automotive lamp comprising one or more cable supports according to the second aspect of the invention.

A fourth aspect of the invention relates to a motor vehicle comprising one or more automotive lamps according to the third aspect of the invention.

Similar advantages as those described for the first and second aspects of the invention are also applicable to the third and fourth aspects of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figures 1A-1B and 2A-2B show cable supports in accordance with embodiments.
Figures 3 to 7 show exemplary brackets for use in cable supports according to the present disclosure.
Figures 8 and 9 show exemplary attaching devices for use in cable supports according to the present disclosure.
Figure 10 shows a device for avoiding cable entanglement during installation of the cable support.
Figures 11 to 14 partially show interiors of housings of automotive lamps with cable supports in accordance with embodiments attached thereto.

### DESCRIPTION OF WAYS OF CARRYING OUT THE INVENTION

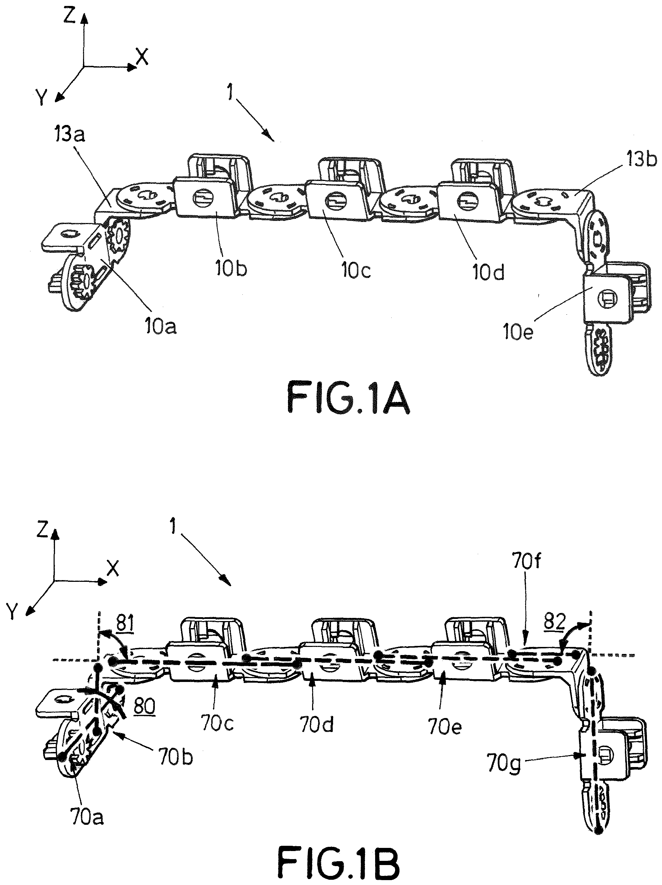

Figures 1A and 1B show a cable support 1 in accordance with an embodiment. The cable support 1 comprises a plurality of brackets 10a-10e, 13a-13b with which it routes one or more cables (not illustrated). In this example, only brackets 10a-10e, 13a-13b of two geometries are used, however in other embodiments the cable supports comprises brackets with one, three or even more geometries.

The cable support 1 extends such that it changes the direction two times. Particularly, a first bracket 10a on the left makes a first portion of the cable support 1 extend along the Y axis represented. A second bracket 13a mechanically concatenated with the first bracket 10, and also mechanically concatenated with a third bracket 10b, changes the direction of the cable support 1 such that a second portion thereof extends along the Z axis represented and a third portion thereof extends along the X axis represented (as shown with angles 80, 81 represented in Figure 1B). The third bracket 10b is mechanically concatenated with a fourth bracket 10c, in turn also mechanically concatenated with a fifth bracket 10d, this in turn mechanically concatenated with a sixth bracket 13b; these brackets provide part of the length of the cable support 1 extending along the X axis represented. A further change in direction occurs by the mechanical concatenation between the fifth bracket 10d and a sixth bracket 13b, the cable support 1 thereby extending in a fourth portion thereof along the Z axis represented (as shown with angle 82 represented in Figure 1B). A seventh bracket 10e is mechanically concatenated with the sixth bracket 13b.

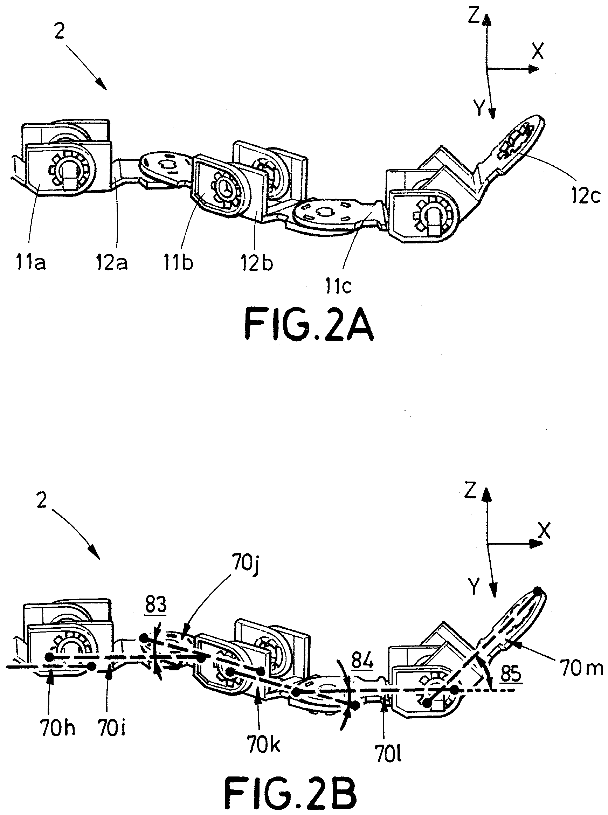

In this example, the changes in the direction in which the cable support 1 extends form 90° angles, but in other examples (e.g. Figures 2A-2B) the direction(s) may change less or more than 90°.

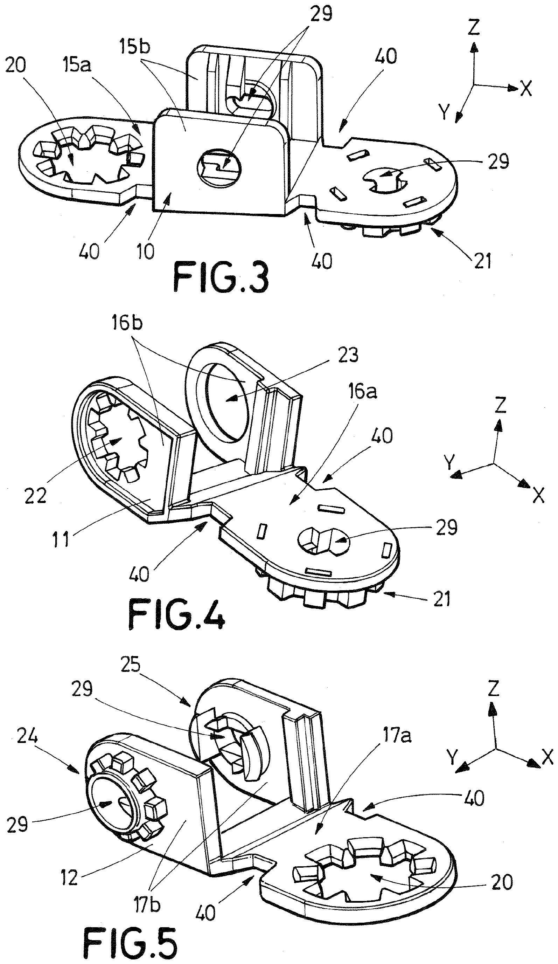

Each bracket according to the present disclosure has longitudinal, transversal and vertical axes that are preferably defined respect to the bracket laying still and having a base plane defined by two perpendicular axes (e.g. X and Y axes), and wherein the vertical direction (e.g. Z axis) is perpendicular to the base plane. In this sense, preferably the longitudinal axis corresponds to the lengthwise direction of the base of the bracket, the transversal axis corresponds to the direction perpendicular to the longitudinal axis and contained within the base plane, and the vertical axis corresponds to the vertical direction. With reference to Figure 1A, the X, Y and Z axes represent the three dimensions of the cable support 1, but by way of example, the longitudinal, transversal and vertical axes of the third, fourth, fifth and sixth brackets 10b-10d, 13b coincide with the X, Y and Z axes represented, respectively; the longitudinal, transversal and vertical axes of the seventh bracket 10e coincide with the Z, Y and X axes represented, respectively, and so on for the remaining brackets. An exemplary longitudinal axes definition of the brackets of cable support 1 is shown in Figure 1B for the sake of clarity only. Also, exemplary definitions of axes of the brackets are shown in Figures 3 to 7.

Figure 1B shows, for the sake of clarity only, exemplary longitudinal axes 70a-70g of the first to seventh brackets 10a-10e, 13a, 13b of the cable support 1, respectively, and the angles 80-82.

The base planes of the first and second brackets 10a, 13a are preferably defined by the Y and Z axes represented, and the respective first and second longitudinal axes 70a, 70b thereof are contained within said base planes. The base plane of the seventh bracket 10e is also preferably defined by the Y and Z axes represented, and the respective seventh longitudinal axis 70g thereof is contained within said base plane. The base planes of the third, fourth, fifth and sixth brackets 10b-10d, 13b are preferably defined by the X and Y axes represented, and the respective third, fourth, fifth and sixth longitudinal axes 70c-70f thereof are contained within said base planes.

The first change of direction of the cable support 1 corresponds to the first angle 80 formed between the first and second longitudinal axes 70a, 70b in a Y-Z plane. The second change of direction corresponds to the second angle 81 formed between the second and third longitudinal axes 70b, 70c in an X-Z plane. And the third change of direction corresponds to the third angle 82 formed between the sixth and seventh longitudinal axes 70f, 70g in an X-Z plane.

As it can be observed, the changes of direction are due to the angles formed between two longitudinal axes in a common plane containing both axes. Said plane does not necessarily coincide with any one of the respective base planes whereby each longitudinal axis is preferably defined.

Figures 2A and 2B show a cable support 2 in accordance with an embodiment. The cable support 2 comprises a plurality of brackets 11a-11c, 12a-12c with which it routes one or more cables (not illustrated).

In this example, first and second brackets 11a, 12a are mechanically concatenated together, the second and a third brackets 12a, 11b are mechanically concatenated together, the third and a fourth brackets 11b, 12b are mechanically concatenated together, the fourth and a fifth brackets 12b, 11c are mechanically concatenated together, and the fifth and a sixth brackets 11c, 12c are mechanically concatenated together.

For the sake of clarity only, represented in Figure 2B are first to sixth longitudinal axes 70h-70m (with dashed lines) of the respective first to sixth brackets 11a-11c, 12a-12c. Also represented therein are the angles 83-85 resulting in changes of direction of the cable support 1.

A first pair of brackets comprising the second and third brackets 12a, 11b is mechanically concatenated together in such a way that it provides a change in the direction in which the cable support 2 extends. With said mechanical concatenation, a first angle 83 is formed between the longitudinal axes 70i, 70j of the second and third brackets 12a, 11b; these longitudinal axes 70i, 70j are contained in a first common plane in the X and Y axes represented, so the change in the direction is done in said first common plane containing said longitudinal axes 70i, 70j.

A second pair of brackets comprising the fourth and fifth brackets 12b, 11c is mechanically concatenated together in such a way that it provides a further change in the direction in which the cable support 2 extends. With said mechanical concatenation, a second angle 84 is formed between the longitudinal axes 70k, 701 of the fourth and fifth brackets 12b, 11c; these longitudinal axes 70k, 701 are contained in the first common plane, so the change in the direction is done in said first common plane.

A third pair of brackets comprising the fifth and sixth brackets 11c, 12c is mechanically concatenated together in such a way that it provides a further change in the direction in which the cable support 2 extends. With said mechanical concatenation, a third angle 85 is formed between the longitudinal axes 70l, 70m of the fifth and sixth brackets 11c, 12c; these longitudinal axes 70l, 70m are contained in a second common plane in the X and Z axes represented, so the change in the direction is done in said second common plane.

Each time the direction changes, the change and thus, the angle, are within a plane common to both longitudinal axes (i.e. a plane containing both longitudinal axes), namely the longitudinal axes of each bracket of the pair of brackets.

In this example, the direction changes are due to the way in which the male and female connectors of the brackets are engaged; as it can be seen, both the male and the female connectors have a regular geometry in the form of a star, particularly an 8-point star that makes possible to form different 45° angle combinations (e.g. 45°, 90°, 135°, etc.); other geometries are also possible for providing other angles, including geometries with curvilinear edges or with irregular polygonal geometries. Therefore, the engagement may result in the longitudinal axes of the pair of brackets being parallel or forming an angle. In contrast, in the cable support 1 of Figures 1A-1B the direction changes are due to the geometry of some brackets (in particular, the second and sixth brackets 13a, 13b thereof) yet the mechanical connectors thereof also support engagements that result in changes of direction. In other embodiments, a cable support combines both of these configurations so that it may be better adjusted to the shape of the housing of an automotive lamp.

Figure 3 shows an exemplary bracket 10 for use in cable supports according to the present disclosure, such as, for instance, the cable support 1 of Figure 1.

The bracket 10 comprises a first surface or base 15a defining a base plane. Preferably, the longitudinal axis is defined along the lengthwise dimension (corresponding to the X axis represented) of the first surface or base 15a while the bracket 10 is laying still, the transversal axis is defined along the dimension of the first surface or base 15a perpendicular to said lengthwise dimension (corresponding to the Y axis represented), and the vertical direction is defined along the dimension perpendicular to the first surface or base 15a (corresponding to the Z axis represented).

The bracket 10 is provided with a female mechanical connector 20 and a male mechanical connector 21 whereby the bracket 10 is mechanically concatenable with other brackets; the mechanical connectors 21 are arranged at ends of the first surface or base 15a with respect to the longitudinal axis X.

A pair of vertical walls 15b of the bracket 10 are advantageous for routing and holding one or more cables. Also, slots 40 may be provided for receiving cable ties (not illustrated). Preferably, each slot 40 has a matching slot 40 at the opposite edge of the first surface or base 15a of the bracket 10 so that the cable ties can be tightened, thereby holding in place the one or more cables more reliably.

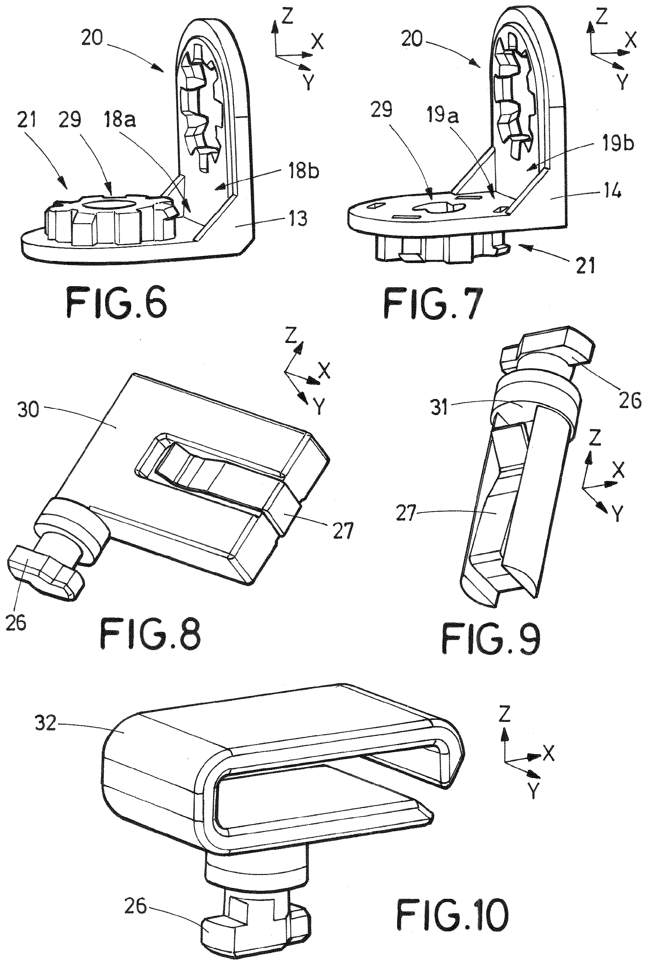

The bracket 10 is further provided with one or more holes 29 adapted to receive an attaching device, for instance attaching devices as illustrated in Figures 8 and 9. The bracket 10 of Figure 3 comprises one hole 29 within the male mechanical connector 21, and one hole 29 in each of the two vertical walls 15b, but other hole placements are also possible within the scope of the present disclosure.

Figure 4 shows an exemplary bracket 11 for use in cable supports according to the present disclosure, such as, for instance, the cable support 2 of Figures 2A, 2B.

The bracket 11 comprises a first surface or base 16a defining a base plane. A similar axes definition as that described with reference to bracket 10 of Figure 3 is also preferred for this bracket 11 while the same is laying still, thus the longitudinal axis, transversal axis and the vertical axis preferably correspond to the X, Y and Z axes represented, respectively.

The bracket 11 comprises a male mechanical connector 21 at one end of the first surface or base thereof, and two different female mechanical connectors 22, 23 at the vertical walls 16b thereof.

In this example, a first of the two female mechanical connectors 22 has a closed shape adapted to support mechanical concatenation to another bracket such that the another bracket may have the longitudinal axis thereof parallel to or forming an angle with the longitudinal axis of the bracket, whereas a second of the two female mechanical connectors 23 has a different closed shape not limiting how a corresponding male mechanical connector is to engage therewith. The first female mechanical connector 22 sets the angular relationship between the bracket 11 and the bracket that mechanically concatenates therewith, whereas the second female mechanical connector 23 is useful for restraining the movement of the two brackets so that they are not mechanically decoupled by accident, however the shape of the second female mechanical connector 23 could be the same as the first female mechanical connector 22 or have a different shape as long as the male mechanical connector engages in a secure and reliable manner (e.g. by being provided with protrusions, such as teeth, or mechanical clips that limit the withdrawal of the mechanical connector). Accordingly, the male mechanical connectors of another bracket (such as that of Figure 5) shall have a shape engageable with the female mechanical connectors 22, 23.

One hole 29 is provided in the male mechanical connector 21 for attachment of the resulting cable support to the housing of the automotive lamp, and two slots 40 at opposite edges for receiving a cable tie.

Figure 5 shows an exemplary bracket 12 for use in cable supports according to the present disclosure, such as, for instance, the cable support 2 of Figure 2.

The bracket 12 comprises a first surface or base 17a defining a base plane. A similar axes definition as that described with reference to bracket 10 of Figure 3 is also preferred for this bracket 12 while the same is laying still, thus the longitudinal axis, transversal axis and the vertical axis preferably correspond to the X, Y and Z axes represented, respectively.

The bracket 12 comprises a female mechanical connector 20 at one end of the first surface or base thereof adapted for mechanical mating with the male mechanical connector 21 of the bracket 11 of Figure 4. The bracket 12 further comprises two different male mechanical connectors 24, 25 at the vertical walls 17b thereof. As it can be observed, a first male mechanical connector 24 has a shape adapted for mating with the first female mechanical connector 22 of bracket 11 so that the angular relationship between the two brackets may be set, whereas the second male mechanical connector 25 has a shape adapted for mating with the second female mechanical connector 25 of bracket 11 so that reliable mechanical coupling is attained owing to protruding elements that prevent accidental mechanical decoupling.

The male mechanical connectors 24, 25 are each provided with a hole 29 for receiving an attaching device.

The vertical walls 15b, 16b, 17b of the brackets 10, 11, 12 are preferably provided so that the brackets have a U-shaped cross-section that maintains the one or more cables in the cable supports and, thus, routing and holding thereof is more reliable.

Figure 6 shows an exemplary bracket 13 for use in cable supports according to the present disclosure, such as, for instance, the cable support 1 of Figures 1A, 1B.

The bracket 13 comprises a first surface or base 18a defining a base plane. Preferably, the longitudinal axis is defined along the lengthwise dimension (corresponding to the X axis represented) of the first surface or base 18a while the bracket 13 is laying still, the transversal axis is defined along the dimension of the first surface or base 18a perpendicular to said lengthwise dimension (corresponding to the Y axis represented), and the vertical direction is defined along the dimension perpendicular 18a to the first surface or base (corresponding to the Z axis represented). However, the first surface or base may be any of the two major surfaces (i.e. the lower surface 18a or the side surface 18b as illustrated in Figure 6) and the axes definition is preferably defined according to the base plane thereof; thus, if the first surface or base corresponds to the side surface 18b, the longitudinal axis, the transversal axis and the vertical axis correspond to the Z, Y and negative X axes, respectively.

The bracket 13 comprises a male mechanical connector 20 at one end of the first surface or base 18a thereof, and a female mechanical connector 21 at one end of a second surface 18b of the bracket 13. The arrangement of the first and second surfaces 18a, 18b results in a change in the direction in which the cable support will extend, in this case a 90° direction change. Notwithstanding, the geometry of the female and male mechanical connectors 20, 21 is adapted to support the engagement of the mechanical connectors of the brackets with different angles so that the change in the direction may be further adapted to the geometry of the housing.

A hole 29 is provided within the male mechanical connector 20 for receiving an attaching device.

Figure 7 shows an exemplary bracket 14 similar to the bracket 13 of Figure 6, but having the male mechanical connector 21 protruding from the opposite side of the respective surface 19a, whereas the female mechanical connector 20 is at a second surface thereof 19b unchanged with respect to the bracket 13 of Figure 6.

It is readily apparent that the exemplary brackets 10-14 of Figures 3-7 may be combined in many different ways so as to form different cable supports which are within the scope of the present disclosure. Also, other exemplary brackets may be similar to brackets 10-14 of Figures 3-7 yet all the mechanical connectors thereof are male or female mechanical connectors, hence it is not necessary that a bracket comprises both a male and a female mechanical connectors; if a bracket only has male mechanical connectors, it may be mechanically concatenated with two other brackets having female mechanical connectors and vice versa.

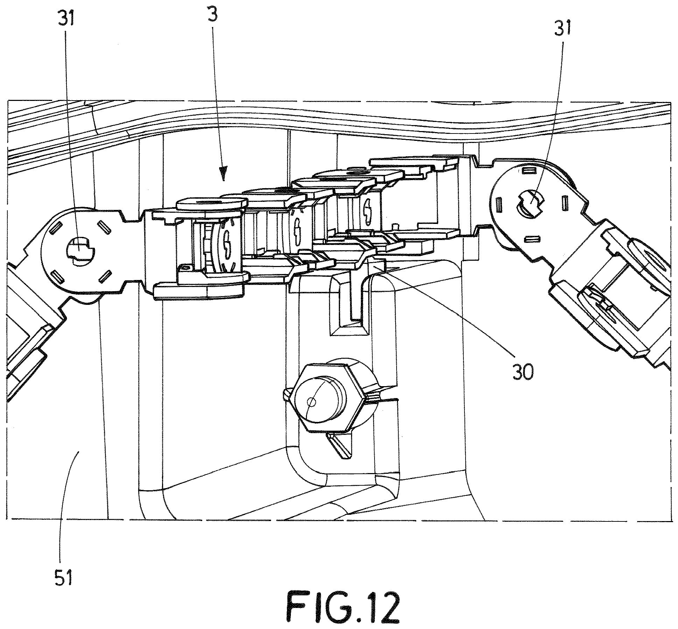

Figure 8 shows an attaching device 30 for use in cable supports according to the present disclosure. The attaching device 30 is provided with a head 26 at an end thereof that is adapted for introduction in a hole (such as hole 29) of the brackets, in this sense the head 26 may have a specific shape for mating with holes having a shape that is complementary, either partially (as shown in the example of Figure 12) or completely.

The attaching device 30 has a body with a shape in the form of a block which is suitable for introduction into wide holes in the housing of automotive lamp. The attaching device 30 is also provided with a mechanism 27, for instance in the form of a U-shaped mechanical clip, that eases fitting within the hole (owing to the elastic behavior of the clip) and precludes removal from the hole due to the protruding part of the ends of the clip.

Figure 9 shows an attaching device 31 for use in cable supports according to the present disclosure. The attaching device 31 is provided with the head 26 at an end thereof. The attaching device 31 has an I-shaped body, which is suitable for introduction into narrow holes in the housing of automotive lamp. The attaching device 31 is also provided with the mechanism 27, in this example also being the U-shaped mechanical clip.

Figure 10 shows a device 32 for avoiding cable entanglement during installation of the cable support. The device 32 is provided with the head 26 at an end thereof so that it may be introduced in one hole of the brackets. The device 32 has a U-shaped body for retaining one or more cables within the inner void part of the body during installation of the cable support and routing of the one or more cables within the automotive lamp, and in some cases also after installation and connection of the cables.

In this regard, the end of the one or more cables that is to be connected to devices within the automotive lamp is preferably retained in the device 32 until the cable support is attached to the housing and the one or more cables are to be connected to said devices. When the cable support is introduced in the housing of the automotive lamp the one or more cables protrude from the cable support, potentially colliding with other objects within the automotive lamp or getting entangled.

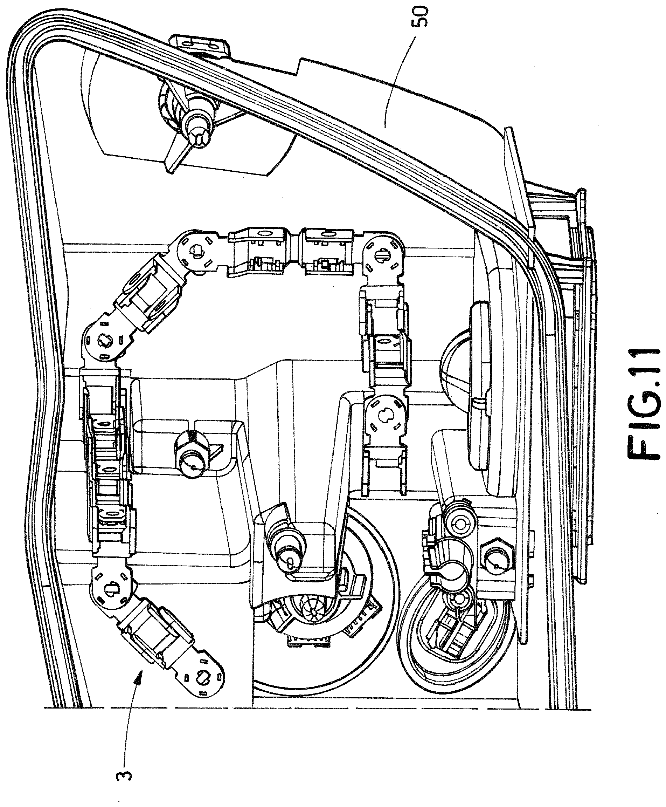

Figure 11 partially shows the interior of a housing of an automotive lamp 50 with a cable support 3.

The cable support 3 is formed by a plurality of brackets so that one or more cables may be routed and held in place from a first end to a second end of the cable support 3. Owing to the changes in direction of the cable support 3, the same is adapted to the geometry of the interior of the housing and the available spaces thereof where the cable support 3 is to be attached to, particularly spaces close to the walls of the housing that are not occupied by the lighting devices.

Figure 12 partially shows the interior of a housing of an automotive lamp 51 with the cable support 3 including attaching devices 30, 31 for securing the cable support 3 to the housing.

The attaching devices 30, 31 have a first end thereof introduced in one hole of at least some brackets and a second end thereof introduced in one hole in the interior of the housing of the automotive lamp 51.

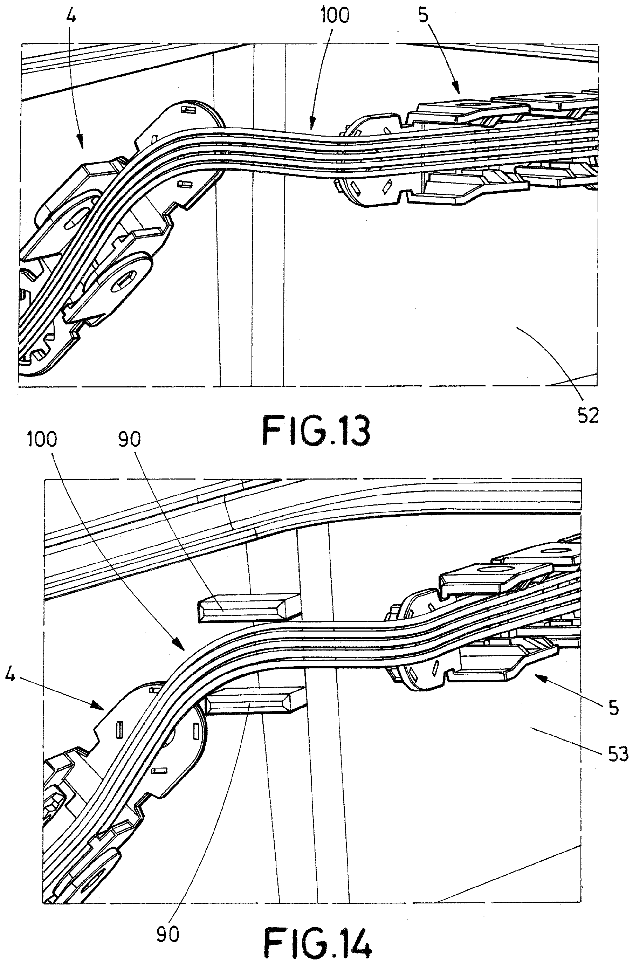

Figure 13 partially shows the interior of a housing of an automotive lamp 52 with first and second cable supports 4, 5 for routing a plurality of cables 100.

Each of the first and second cable supports 4, 5 is formed by a plurality of brackets and the plurality of cables 100 may go from a first location to a second location within the housing of the automotive lamp 52 through the first and second cable supports 4, 5. The formation of two separate cable supports simplifies the geometry thereof and, thus, both the formation and attachment processes of the cable supports 4, 5 as they may be handled more easily by the operators.

In this example, a portion of the plurality of cables 100 is not within any one of the first and second cable supports 4, 5 yet the routing thereof from one end of the first cable support 4 to one end of the second cable support 5 is carried out close to the walls of the housing. In the example of Figure 14, in which a housing of a similar automotive lamp 53 is provided, the portion of the plurality of cables 100 not within any one of the first and second cable supports 4, 5 is routed from one end of the first cable support 4 to one end of the second cable support between two protruding walls 90 arranged on the interior of the housing, thereby more reliably routing the cables 100 in that portion.

It is readily apparent that one or more cable supports may also be attached to the outer part or face of the housings of automotive lamps.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for arranging one or more cables (100) in an automotive lamp (50-53), comprising:
forming a cable support (1-5);
attaching the cable support (1-5) to a housing of the automotive lamp (50, 51);
introducing the one or more cables (100) in the cable support (1-5);
**characterized in that:**
the cable support (1-5) is formed by mechanically concatenating a plurality of brackets (10-14), each bracket (10-14) comprising at least two mechanical connectors (20-25) and having longitudinal, transversal and vertical axes (X, Y, Z); and
at least a first pair of brackets of the plurality of brackets (10-14) is mechanically concatenated together such that a first angle (80-85) is formed between the longitudinal axes (X) thereof.

2. The method of claim 1, wherein the longitudinal axes (X) forming the first angle (80-85) are contained in a first plane, the first plane being defined by:
the longitudinal and the transversal axes (X, Y) of a first bracket of the first pair of brackets (10-14); or
the longitudinal and the vertical axes (X, Z) of the first bracket of the first pair of brackets (10-14).

3. The method of claim 2, wherein at least a second pair of brackets of the plurality of brackets (10-14) is mechanically concatenated together such that a second angle (80-85) is formed between the longitudinal axes (X) thereof that are contained in the first plane or in a second plane, the second plane being defined by:
the longitudinal and the transversal axes (X, Y) of a first bracket of the second pair of brackets; or
the longitudinal and the vertical axes (X, Z) of the first bracket of the second pair of brackets.

4. The method of any one of the preceding claims, wherein:
at least some brackets of the plurality of brackets (10-14) comprise a hole (29) for receiving an attaching device (30, 31); and
the step of attaching the cable support (1-5) to the housing of the automotive lamp (50-53) comprises introducing a first end (26) of the attaching devices (30, 31) in one hole (29) of the at least some brackets and a second end (27) in one hole in the housing of the automotive lamp (50-53).

5. The method of any one of the preceding claims, further comprising providing cable ties around at least some brackets of the plurality of brackets (10-14) after the one or more cables (100) have been introduced in the cable support (1-5), wherein the at least some brackets comprise slots (40) at opposite edges adapted for receiving a cable tie.

6. The method of any one of the preceding claims, wherein:
the cable support (1-5) is a first cable support (4) and the plurality of brackets (10-14) is a first plurality of brackets (10-14); and
the method further comprises:
forming a second cable support (5) by mechanically concatenating a second plurality of brackets (10-14), each bracket (10-14) comprising at least two mechanical connectors (20-25);
attaching the second cable support (5) to the housing of the automotive lamp (50-53); and
introducing the one or more cables (100) in the second cable support (5) such that a first part of length of the one or more cables (100) is introduced in the first cable support (4) and a second part of the length of the one or more cables (100) is introduced in the second cable support (5).

7. The method of any one of the preceding claims, wherein each bracket (10-14) has at least one of the at least two mechanical connectors (20-25) adapted to support mechanical concatenation to another bracket such that the another bracket may have the longitudinal axis (X) thereof parallel to or forming an angle (80-85) with the longitudinal axis (X) of the bracket.

8. A cable support (1-5) for routing one or more cables (100) in an automotive lamp (50-53), **characterized in that** it comprises a plurality of brackets (10-14) mechanically concatenated, each bracket (10-14) comprising at least two mechanical connectors (20-25) and having longitudinal, transversal and vertical axes (X, Y, Z), and at least a first pair of brackets of the plurality of brackets (10-14) is mechanically concatenated together such that a first angle (80-85) is formed between the longitudinal axes (X) thereof.

9. The cable support (1-5) of claim 8, wherein the longitudinal axes (X) forming the first angle (80-85) are contained in a first plane, the first plane being defined by:
the longitudinal and the transversal axes (X, Y) of a first bracket of the first pair of brackets; or
the longitudinal and the vertical axes (X, Z) of the first bracket of the first pair of brackets.

10. The cable support (1-5) of claim 9, wherein at least a second pair of brackets of the plurality of brackets (10-14) is mechanically concatenated together such that a second angle (80-85) is formed between the longitudinal axes (X) thereof that are contained in the first plane or in a second plane, the second plane being defined by:
the longitudinal and the transversal axes (X, Y) of a first bracket of the second pair of brackets; or
the longitudinal and the vertical axes (X, Z) of the first bracket of the second pair of brackets.

11. The cable support (1-5) of any one of claims 8-10, further comprising a plurality of attaching devices (30, 31); wherein at least some brackets of the plurality of brackets (10-14) comprise a hole (29) for receiving an attaching device (30, 31); and each attaching device (30, 31) has a first end (26) introduced in one hole (29) of the at least some brackets and a second end (27) adapted for introduction in a hole in a housing of the automotive lamp (50-53).

12. The cable support (1-5) of any one of claims 8-11, further comprising the one or more cables (100), and a plurality of cable ties, wherein at least some brackets comprise slots (40) at opposite edges adapted for receiving a cable tie, and wherein each cable tie of the plurality of cable ties surrounds one bracket (10-14) and holds the one or more cables (100) in the bracket (10-14).

13. The cable support (1-5) of any one of claims 8-12, wherein each bracket (10-14) has at least one of the at least two mechanical connectors (20-25) adapted to support mechanical concatenation to another bracket such that the another bracket may have the longitudinal axis (X) thereof parallel to or forming an angle (80-85) with the longitudinal axis (X) of the bracket.

14. The method of claim 7, or the cable support (1-5) of claim 13, wherein the at least one mechanical connector (20-25) of each bracket (10-14) is a male or a female mechanical connector (20-25) that has a shape comprising straight and/or curvilinear edges.

15. An automotive lamp (50-53) comprising one or more cable supports (1-5) according to any one of claims 8-14.
